# EUROPEAN PATENT APPLICATION

(11) **EP 4 600 820 A1**
(43) Date of publication of application: **13.08.2025**
(21) Application number: 24156104.2
(22) Date of filing: 06.02.2024
(51) Int. Cl.: G06F 9/50

(54) **METHOD FOR DEPLOYING AT LEAST ONE WORKFLOW ON A COMPUTATIONAL NETWORK OF COMPUTING SYSTEMS AND DEPLOYMENT CONTROL SYSTEM**

(71) Applicant: Siemens Aktiengesellschaft, 80333 München (DE)
(72) Inventor: Sauer, Markus, 81739 München (DE); Zalewski, Lukasz, 80469 München (DE)
(74) Representative: Siemens Patent Attorneys

(57) **Abstract**

The method for deploying at least one workflow on a computational network comprises the steps of
monitoring a performance parameter of the computational network and deploying the workflow in the form of a serverless workflow or in the form of a monolithic workflow, wherein the form of the workflow is chosen depending on the performance parameter.

## Description

The invention related to a method for deploying at least one workflow on a computational network of computing systems and deployment control system.

Serverless is a modern computing paradigm, which allows to define an application as a composition of independent and mostly stateless functions, which could be written in many different programming languages. Such functions of serverless applications can be triggered each by one or more external event. Such a composition of functions is often called a workflow since it uses basic building blocks to realize some more complicated business logic. Computation results of such functions or workflows are forwarded to another subsystem or to the user of the serverless application directly. An example of such a workflow would be e.g., preprocessing of an uploaded image with a first function, annotating the recognized objects using a second function and storing the image together with annotations into a database with a third function. In this case, the uploading of an image constitutes a triggering event for the first function and so forth. In serverless, such functions are dynamically deployed and available to use on different host systems. Incoming client requests are then dynamically routed to the available instances and more instances are bootstrapped in case they are needed. The location of functions that handle user requests is entirely transparent and handled by the serverless runtime.

Serverless is also a well-established offering of big cloud providers, where it is also referred to as Function as a Service (FaaS). FaaS lies on the highest levels of computing infrastructure operation automation and requires little to no operational effort from the user side. E.g., compared to IaaS and PaaS, where a certain operational effort is always included, e. g. for the management of virtual machines, etc., direct management of infrastructure is abstracted and hidden from the user. Thus, FaaS is very attractive from multiple perspectives:
From a business perspective it is attractive that computational resources may be used very efficiently. E. g. computational resources may be allocated with a fine granularity, such as per function call and/or for CPU usage in a function call and/or for memory used during a function call, and not for the idle times between function invocations.

From a technical perspective it is attractive that an application developer does not have to care about designing, configuring, and operating the hosting system, e.g., a virtual machine, for the application, as this is handled automatically in FaaS. This allows developers to release new features more rapidly and removes the operations burden. From a systems architecture perspective, it is attractive that the workflows automatically scale to handle bursty and unpredictable workloads. This solves the problem of overprovisioning by shutting down instances that are not used and by provisioning new instances only when the demand arises.

Due to these features, the serverless paradigm and FaaS are heavily used in business intelligence and e-commerce systems to handle the dynamic application requests coming from users or incidents in the business environment. A commonly discussed example is the processing of food delivery orders, which are characterized by their unpredictability and possible high-demand periods.

However, a chain of serverless functions integrating as a workflow spends a significant amount of time on communicating the partial results between different instances of the functions and for finding a free instance of the next function to invoke, or handling invocation errors. This has significant impact on user-perceived latencies if a workflow becomes complex. Moreover, provisioning of new instances of functions, even with recent technological advancements, still incurs a time penalty of the order of hundreds of milliseconds. Hence, in some use cases, given a fairly uniform and predictable requests stream, a non-serverless integrated application deployed on a dedicated infrastructure using modern technology might outperform a serverless solution of the same kind in terms of costs or pure performance. By avoiding the high cost of intermediary communication between function instances, returning to a consolidated solution might be more efficient in some cases.

Thus, both the traditional approach to workflows as well as the serverless paradigm have significant disadvantages that must be considered.

Accordingly, it is a problem of the invention to provide an improved method for deploying at least one workflow on a computational network. In particular, the method according to the invention should balance the potential disadvantages of poor design choices of the form of the deployment of the workflow.

In addition, it is the problem of the invention, to provide an improved deployment control system, that allows to conduct the improved method according to the invention.

This problem of the invention is solved by a method for deploying at least one workflow comprising the features detailed in claim 1 and with a deployment control system comprising the features detailed in claim 8. Advantageous aspects of the invention are represented in the dependent claims, the following description and the attached drawing.

The method according to the invention is a method for deploying at least one workflow on a computational network. The method according to the invention comprises the steps of monitoring a performance parameter of the computational network and of deploying the workflow in the form of a serverless workflow or in the form of a monolithic workflow, wherein the form of the workflow is chosen depending on the performance parameter.

The method according to the invention overcomes the disadvantages present in the state in the art in that it allows developers to implement a workflow, in particular a complete application, in a serverless fashion with more flexibility. The invention advantageously provides a mechanism to optimize the deployment of workflows depending on a performance parameter of the computational network, such as a monitored usage of the workflow, and observed computing cluster data. The method according to the invention can then dynamically decide to keep the workflow either as a pure serverless workflow in a FaaS environment or to transform it into an optimized, bundled, monolithic workflow on a dedicated computational network node or device. It also allows to mix these two scenarios and to provide a hybrid deployment of both paradigms, should it be a better choice in a given usage scenario. Achieved optimizations can range from lower latencies and better resources usage to lower overall costs.

In other words, it is the key idea of the invention that with the corresponding method the cluster state is observed and the number of incoming invocations of workflow or function in a given time frame is monitored, e. g. with a dedicated monitoring component. The observed data may be analyzed and an optimal deployment configuration is derived, i. e. the form of the workflow, for the current application usage. This configuration is a blueprint that can then be applied to the system, to optimize its behavior. In this deployment configuration proposal, one could either decide for a standard serverless deployment based on FaaS paradigm or for an optimized, single deployment artifact running natively on a dedicated compute node, such as a server. A potentially present monitoring component may also propose to use a hybrid solution, where both configurations are deployed together and act in unison.

For example, in case the performance parameter indicates that it would be beneficial to bootstrap a powerful dedicated node of the computational network such as a single machine or a a dedicated cluster of machines, which could just process the invocation requests by utilizing e. g. multiple cores in order to save costs and improve the performance, in particular by lowering latencies and processing data faster, it would trigger the deployment of the workflow. Triggering the deployment of the workflow involves gathering necessary component artifacts such as function source codes from an artifact repository and building an optimized deployment artifact. Deploying the workflow onto a specific compute node involves connecting all the functions of a workflow with each other, e. g. with simple OS level communication mechanisms like pipes to further reduce latencies. Moreover, the main procedures of each function, even if written in different programming languages, could be extracted and just placed in one main function using some intermediary representation such as e.g., LLVM IR. Continuing, a simple LLVM pass could further optimize such "glued" code by removing redundant variable assignments, using hardware acceleration etc., that would make the entire workflow even more performant. Finally, such code could be transformed by LLVM backend into a fast binary, which we call a Monoflow, the term representing a portmanteau of monolith and workflow, since it wraps the entire workflow as a monolithic binary. The monoflow can run directly on bare metal or a Type-1 Hypervisor, which would reduce execution costs even further.

In an advantageous aspect of the method according to the invention, the at least one workflow contains two or more functions. Thus, the workflow may be complexly built from multiple functions. In another and likewise advantageous aspect of the invention, the workflow only comprises one function or even consists of one function only.

In an advantageous aspect of the invention, two or more workflows are deployed.

In the method according to the invention, the performance parameter preferably comprises at least one element or more elements of the list comprising
- a number of invocations of the at least one workflow,
- a state of the computational network,
- a measure of a computational network latency,
- a measure of a projected total processor time of the computational network for one or either form of the workflow.

Thus, the deployment may be optimized with various criteria represented by the performance parameter. Depending on the purpose of the workflow or the use case of its operation, a suitable performance parameter may be chosen in order to reflect the appropriate conditions for the performance of the method according to the invention.

Preferably, in the method according to the invention, the performance parameter is monitored for a part of the computational network or a particular use case of the computational network. In particular, two different use cases or different origins of invocations of functions or workflows may be considered. As a preferred example, a sudden burst of requests may be addressed with deploying a workflow in the form of a monolithic workflow, whereas a background of continuous occasional requests may be addressed by deploying a workflow in the form of a serverless workflow.

In an advantageous aspect of the method according to the invention, the workflow is deployed both as form of a serverless workflow and in the form of a monolithic workflow. In this way of deploying the workflow, the workflow can either be used in its monolithic form for a first group of requests and in its serverless form for a second group of requests. In this aspect of the invention, mass requests could be e. g. routed to a monolithic form of the workflow single node of the computational network, whereas sporadic requests to invoke the workflow could flexibly be handled by serverless realizations of the workflow. So both advantages of the contrary paradigms could be used at the same time without realizing the disadvantages of both paradigms.

In a preferred aspect of the method according to the invention, artefacts for building a serverless workflow and artefacts for building a monolithic workflow are stored, wherein the serverless workflow is build using the artefacts for building the serverless workflow in case the form of a serverless workflow is chosen, and the monolithic workflow is build using the artifacts for building the monolithic workflow, in case the monolithic workflow is chosen.

The deployment control system according to the invention is configured for deploying at least one workflow on a computational network according to the method according to the invention as described above. The deployment control system comprises a monitoring unit configured to monitor a performance parameter of the computational network and a deployment unit configured for deploying the workflow in the form of a serverless workflow or in the form of a monolithic workflow, wherein the deployment unit is configured to choose the form of the workflow depending on the performance parameter.

Advantageously, the deployment control system according to the invention further comprises an artefact storage storing artefacts for building a serverless workflow and artefacts for building a monolithic workflow.

In a preferred aspect of the invention, the deployment control system further comprises a deployment choice unit, configured to receive data representing the performance parameter and choosing the form of the workflow depending on the performance parameter.

In the deployment control system according to the invention, the performance parameter preferably comprises at least one element or more elements of the list comprising
- a number of invocations of the at least one workflow,
- a state of the computational network,
- a measure of a computational network latency,
- a measure of a projected total processor time of the computational network for one or either form of the workflow.

The invention is described in further detail with respect to the drawings.
- Fig. 1: shows an example of an application based on a serverless workflow in a computational network in a schematic diagrammatic representation.
- Fig. 2: shows an example of a computational network with a deployment control system according to the invention conducting a method for deploying at least one workflow on a computational network according to the invention.

The following examples are realized within an industrial IoT computational network comprising a cluster EECCC of computing nodes which are also referred to as machines or devices in the description below.

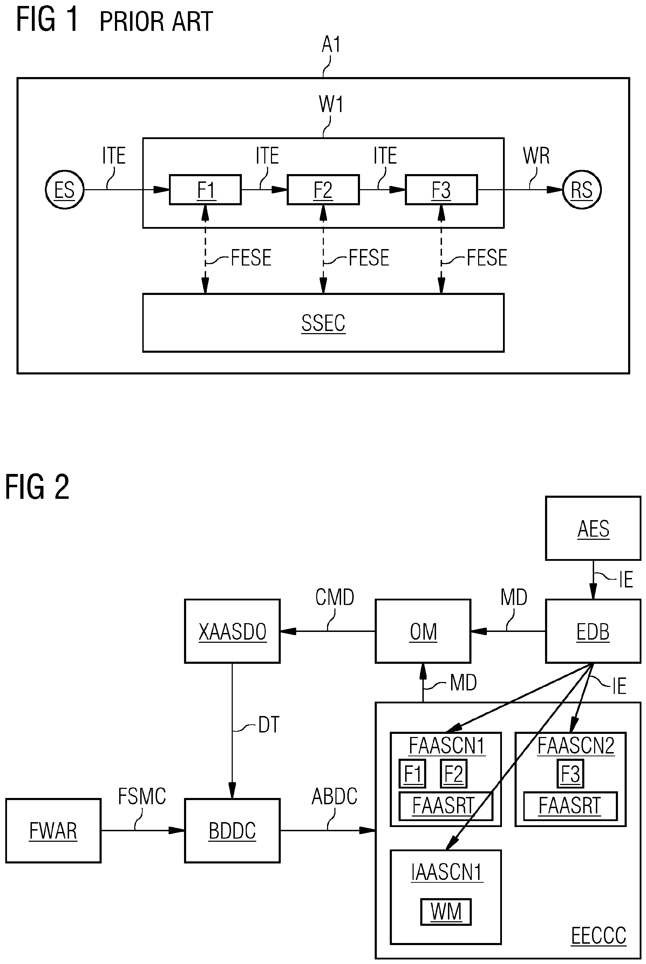

Figure 1 shows and an example application A1 which is based on a serverless workflow W1. The application A1 listens to an event source ES. The event source ES publishes events, which invoke the execution of the workflow W1. An invoking event ITE starts the execution of the workflow W1. The workflow W1 in the depicted example consists of multiple sub-sequent functions F1, F2, F3. The completion of a function F1 or F2, respectively, triggers the invocation of the next function F2 or F3, respectively, of the workflow W1 with a inter workflow event ITE. Functions F1, F2, F3 can have function execution side-effects FESE, such as fetching and publishing data and shared state updates with system side-effect components SSEC. System side-effect components may be monitoring components, storage components, dashboard components, state-synchronization components and/or actuator components. In addition, in next generation serverless systems, it will also be possible to complement workflows and functions with specific requirements, e.g., E2E latency SLAs, specific hardware requirements like Trusted Execution Environment, etc. After the execution of all functions F1, F2, F3 of the workflow W1 the final work flow result WR of the processing is forwarded to an result sink RS as defined in the workflow W1.

All these interdependencies, configuration, and requirements in combination with the invocation event profile and the cluster state, form the parameter set which will be used by the XaaS Deployment Optimizer, to derive the optimal deployment scenario.

Figure 2 shows an example computational network comprising components of a deployment control system and their interactions with each other and the computational network. In addition Fig. 2 also illustrates three different deployment scenario proposals of the same application as defined in Figure 1:
In a first scenario, as depicted in Fig. 2, an XaaS deployment optimizer XAASDO derives an optimal deployment solution as a standard serverless deployment. As an example, client requests are sporadic and bursty in the current time frame and no cost reduction can be predicted. The workflow consisting of the functions F1, F2 and F3 is split across two computing nodes FAASCN1, FAASCN2. Functions F1, F2 are deployed on the computing node FAASCN1, and the function F3 is deployed on the computing node FAASCN2.

In a second scenario, also depicted in Fig. 2, the XaaS deployment optimizer XAASDO derives an optimal deployment solution where all functions F1, F2 F3 are stitched together in one optimized deployment artifact, a so-called monoflow WM, that is deployed on one dedicated machine IAASCN1.

In a third scenario, as also depicted in Fig. 2, the result of the XaaS deployment optimizer XAASDO has been to deploy a combination of the first scenario and the second scenario, e. g. a certain group of invocation requests are handled by the stitched version of the monoflow WM, whereas burst requests are handled by the FaaS deployment as a serverless workflow consisting of the functions F1, F2 and F3.

The proposed method according to the invention is conducted with the components of a deployment control system according to the invention comprising the following key components:
The deployment control system comprises an XaaS deployment optimizer XAASDO.

The XaaS deployment optimizer XAASDO takes care about analyzing the available status of the computational network and the respective usage data, and derives corresponding deployment tasks for the build, deployment, and delivery component BDDC described below. The XaaS deployment optimizer XAASDO has the following functionality:
It keeps track of the number of serverless function invocations of the functions F1, F2, F3, also called requests, in the current time frame. In case a single dedicated device could serve all these requests faster, the respective device is started, and all the requests are routed there.

The XaaS deployment optimizer XAASDO measures the amount of compute power that has been saved in units of vCPUs/vGB of memory saved and re-optimizes, in the depicted example using AI. In other examples, re-optimizing may be conducted with a dedicated explicit algorithm instead of AI.

Key criterium for the XaaS deployment optimizer XAASDO while selecting the best target for deployment and execution is the effective performance gain presumably achieved. Thus, the effective performance gain of using a dedicated node must be greater than the actual cost of provisioning such a node.

The deployment control system additionally comprises a function and workflow artifact repository FWAR. The function and workflow artifact repository FWAR contains the necessary artifacts to either build the artifacts for a serverless deployment or a monolithic, that is a binary, stitched and optimized, deployment. This can include source code, but also any other kind of libraries and metadata FSMC.

The deployment control system additionally comprises a build, deployment, and delivery component BDDC: The build, deployment, and delivery component BDDC takes care to build the deployment artifacts according to deployment tasks DT received and the selected target in the deployment tasks DT. It also takes care about the deployment and delivery to the specifically selected compute nodes.

The deployment control system additionally comprises an operation monitoring component OM. The operation monitoring component OM is responsible for gathering data regarding events for function and workflow invocations IE, side-effect usage, cluster status, etc. These monitoring data MD are then used by the XaaS deployment optimizer XAASDO to derive an optimal deployment scenario according to current usage of the computational network and the constraints and behaviors of functions and workflows.

The deployment control system additionally comprises application event sources AES. The application event sources AES are located external to the system and trigger and invoke the execution of functions and workflows of the corresponding application A1 with function and workflow invocations IE.

The deployment control system additionally comprises an event dispatcher, and balancer module EDB: The event dispatcher, and balancer module takes care about correct routing and establishment of data and control flows in-between the computational network, for functions F1, F2, F3, and workflows W1, other executables WM, and to external event sources ES and result sinks RS.

The computing nodes FAASCN1, FAASCN2, IAASCN1 execute the application A1 and its functions F1, F2, F3 and workflows WM.

As described with the help of Fig. 1, the functions F1, F2, F3 and workflows W1 are the components of the application A1 that define the business logic of the application A1. They can be combined in an arbitrary manner by the application developer to create applications A1 to be deployed in the computing computational network.

The deployment control system additionally comprises a FaaS runtime (not shown explicitly). The FaaS runtime allows the execution of functions F1, F2, F3 as defined in an advanced serverless computing paradigm.

In general, the components of the deployment control system can be realized in distributed manner and either be deployed across the computing nodes of the computational network or in a centralized manner on dedicated computing node of the computational network.

In an extension of the proposed system the XaaS deployment optimizer XAASDO can be extended by a usage prediction model based on usage statistics e.g., implemented with AI tools. This allows to adapt the deployment setup dynamically according to the model in predictive manner to be able to directly potential future application request scenarios.

Advantageously, the method according to the invention allows for performance and cost optimization based on additional mechanisms in an automated computing infrastructure, without inducing additional efforts to the application developer and/or the infrastructure operator. It brings even more intelligence to serverless paradigm.

The method according to the invention allows the flexible and automated selection of the best linking, deployment and operation model of a specific application based on serverless principles. If demand and invocation are irregular and low, a FaaS deployment only model can be applied. If continuous invocation demand is detected, the workflows can be composed to a specific and performance optimized full application deployed on a specific machine. If a continuous base load is detected and additional invocation happens in bursts even a hybrid model can be applied, where a dedicated optimized application handles the base load and all other invocations are handled in a pure serverless / FaaS manner.

The method according to the invention also allows for a dynamic deployment of optimized applications close to the source of invocation events and data sources, to optimize end-to-end performance.

The method according to the invention increases the degree of flexibility in system design around the serverless paradigm, as it clarifies whether the serverless paradigm is even needed and whether a monolithic realization of workflows could result in faster processing times. The method according to the invention provides a guarantee, that the workflow will always be executed in the most optimal manner and not just to conform to a chosen paradigm.

Advantageously, the method according to the invention allows scaling to infinity, as further monoflows could be bootstrapped based on demand, in case of e.g., viral effect on a business application, where an number of users increased by orders of magnitude try to access our services unexpectedly.

As an additional advantage of the method according to the invention, developers may flexibly construct their workflow using simple low-code environments that can then be either deployed as a monoflow or as a serverless workflow.

## Claims

1. Method for deploying at least one workflow on a computational network, comprising the steps of
monitoring a performance parameter of the computational network and deploying the workflow in the form of a serverless workflow or in the form of a monolithic workflow, wherein the form of the workflow is chosen depending on the performance parameter.

2. Method according to claim 1, wherein the at least one workflow contains two or more functions.

3. Method according to one of the preceding claims, wherein two or more workflows are deployed.

4. Method according to one of the preceding claims, wherein the performance parameter comprises at least one element or more elements of the list comprising
- a number of invocations of the at least one workflow,
- a state of the computational network,
- a measure of a computational network latency,
- a measure of a projected total processor time of the computational network for one or either form of the workflow.

5. Method according to one of the preceding claims, wherein the performance parameter is monitored for a part of the computational network or a particular use case of the computational network.

6. Method according to one of the preceding claims, wherein the workflow is deployed both as form of a serverless workflow and in the form of a monolithic workflow.

7. Method according to one of the preceding claims, wherein artefacts for building a serverless workflow and artefacts for building a monolithic workflow are stored, wherein the serverless workflow is build using the artefacts for building the serverless workflow, in case the form of a serverless workflow is chosen and the monolithic workflow is build using the artifacts for building the monolithic workflow, in case the monolithic workflow is chosen.

8. Deployment control system, configured for deploying at least one workflow on a computational network according to the method according to one of the preceding claims, comprising a monitoring unit configured to monitor a performance parameter of the computational network and a deployment unit configured for deploying the workflow in the form of a serverless workflow or in the form of a monolithic workflow, wherein
the deployment unit is configured to choose the form of the workflow depending on the performance parameter.

9. Deployment control system according to the preceding claim, further comprising an artefact storage storing artefacts for building a serverless workflow and artefacts for building a monolithic workflow.

10. Deployment control system according to one of the preceding claims, further comprising a deployment choice unit, configured to receive data representing the performance parameter and choosing the form of the workflow depending on the performance parameter.

11. Deployment control system according to one of the preceding claims, wherein the performance parameter comprises at least one element or more elements of the list comprising
- a number of invocations of the at least one workflow,
- a state of the computational network,
- a measure of a computational network latency,
- a measure of a projected total processor time of the computational network for one or either form of the workflow.
